# EUROPEAN PATENT APPLICATION

(11) **EP 4 307 162 A1**
(43) Date of publication of application: **17.01.2024**
(21) Application number: 23180027.7
(22) Date of filing: 19.06.2023
(51) Int. Cl.: G06K 7/00, G06K 19/07, G06K 19/077, G06K 7/10

(54) **A METHOD FOR WIRELESS INFORMATION EXCHANGE BETWEEN A USER DEVICE AND A FOOD PACKAGE**

(30) Priority: 15.07.2022 EP 22185112
(71) Applicant: Tetra Laval Holdings & Finance S.A., 1009 Pully (CH)
(72) Inventor: MELANDRI, Antonio, 41123 Modena (IT); SCARABELLI, Paolo, 41123 Modena (IT); BARONI, Stefano, 41123 Modena (IT); BERGAMINI, Davide, 41123 Modena (IT)
(74) Representative: Tetra Pak - Patent Attorneys SE

(57) **Abstract**

A method (400) for wireless information exchange between a user device (102) and a food package (104) holding a liquid food product is provided. The food package (104) is made of a packaging material (202) and comprises a first Radio Frequency Communication (RFC) device (106) having a first working frequency and is unshielded. The user device (102) comprises a user interface (114) and a second RFC device (116) having a second working frequency, wherein the second working frequency is greater than the first working frequency. The method comprises providing (402) the food package (104) within a communication range of the user device (102), activating (404) the first RFC device (106) by an electromagnetic field (108) generated by the user device (102), transmitting (406) a first signal by the second RFC device (116), wherein the first signal corresponds to an information exchange request (110) on the second working frequency, transforming (408) the first signal into a second signal using the conductive properties of the packaging material and/or the product held in the food package, wherein the second signal corresponds to the information exchange request (110) on the first working frequency, receiving (410) the second signal by the first RFC device (106), transmitting (412) a third signal by the first RFC device (106), wherein the third signal is a response (112) corresponding to the information exchange request on the first working frequency, transforming (414) the third signal into a fourth signal using the conductive properties of the packaging material and/or the product held in the food package, wherein the fourth signal corresponds to the response (112) to the information exchange request on the second working frequency, and receiving (416) the fourth signal by the user device (102).

## Description

### Technical Field

The invention relates to packaging technology. More particularly, it is related to a method for wireless information exchange between a food package holding a liquid food product and a user device such as a mobile phone.

### Background Art

Today, within the food industry, identification and traceability of food packages are important for producers, distributors, retailers and consumers. Information such as origin, place and date of manufacturing, expiration date and contents of the product are often printed directly on the food package. There is however a limit to how much information that can be printed on a food package. QR codes is known to have been used on food packages as a way of providing more information. It allows the consumer to access additional information by scanning the code with, for instance, a mobile phone. However, it is not possible to add information to the food package after the code has been printed.

There exists technology today that can fulfill the requirements of providing a unique identifier as well as the possibility of exchanging information. These are Radiofrequency identification (RFID) devices, or more specifically Near Field Communication (NFC) devices, sometimes referred to as NFC tags. These tags are however sensitive to electromagnetic interference that may be caused by nearby conductive materials. This can be a problem with food packages since the packaging material may contain metallic layers or the product itself may be conductive.

Today, to overcome this problem, there are NFC tags provided that are made to work in close proximity to conductive materials, e.g. metals. This can be done by providing a shielding layer of ferrites between the tag and the metal. The ferrite layer reduces the influence of the metal layer but reading performances can anyhow be affected. Furthermore, the ferrite layer also results in an increased cost.

### Summary

It is an object of the invention to at least partly overcome one or more of the above-identified limitations of the prior art. In particular, it is an object to provide a cost-effective method for wireless information exchange with a food package holding a liquid food product by making use of the conductive properties that the packaging material or product may have.

It has been realized that by taking into account the impact of the conductive properties of the packaging material and/or the product held in the food package, a NFC device can be produced without a shielding layer by having a working frequency, different from the standardized NFC frequency, that will in combination with the packaging material and/or food product be able to communicate with standard NFC readers. Put differently, instead of trying to reduce the impact of the packaging material and/or the food product by using the shielding layer, which has been the chosen path up until now, it has been realized that as an effect of that the food packages can be produced in a precise manner, e.g. having layer thicknesses within narrow intervals, effects of the packaging material can be consistent, which in turn provides for that the impact of the packaging material can be taken into account when producing the NFC device. Since also food processing of today can result in that properties of the food product can be held within narrow intervals, i.e. consistent and well defined product properties can be achieved, the conductive properties also for the food product can be defined precisely. As a result, as explained above, this provides for that the effects on the wireless information exchange from the packaging material and the food product can be taken into account for, instead of for instance reducing by using shielding layers. In case the packaging material does not affect the wireless information exchange, only the effects related to the food product can be taken into account. As used herein, "liquid food" refers to any food product that is non-solid, semi-liquid or pourable at room temperature, including beverages, such as fruit juices, wines, beers, sodas, as well as dairy products, sauces, oils, creams, custards, soups, etc, and also solid food products in a liquid, such as beans, fruits, tomatoes, stews, etc.

This new approach provides for cost efficiency since the costly shielding layer otherwise required in the NFC device can be removed. Further, more compact NFC devices can be provided, which provides for that the these may be integrated better with the food package. Also, since less metal is needed in the NFC device when removing the shielding layer, there is an environmental benefit as well.

According to a first aspect it is provided a method for wireless information exchange between a user device and a food package holding a liquid food product, wherein the food package may be made of a packaging material and may comprise a first Radio Frequency Communication (RFC) device having a first working frequency, wherein the first RFC device may be unshielded. The user device may comprise a user interface and a second RFC device having a second working frequency, and wherein the second working frequency may be greater than the first working frequency. The method may comprise providing the food package within a communication range of the user device, activating the first RFC device by an electromagnetic field generated by the user device, transmitting a first signal by the second RFC device, wherein the first signal may correspond to an information exchange request on the second working frequency, transforming the first signal into a second signal using the conductive properties of the packaging material and/or the product held in the food package, wherein the second signal may correspond to the information exchange request on the first working frequency, receiving the second signal by the first RFC device, transmitting a third signal by the first RFC device, wherein the third signal may be a response corresponding to the information exchange request on the first working frequency, transforming the third signal into a fourth signal using the conductive properties of the packaging material and/or the product held in the food package, wherein the fourth signal may correspond to the response to the information exchange request on the second working frequency, and receiving the fourth signal by the user device.

Put differently, the first and second RFC device communicate on the second working frequency. However, in an isolated state, i.e. isolated from any conductive materials, the first RFC device is configured to communicate on the first frequency. But when the first RFC device is applied on the food package, in a vicinity of the conductive materials, it is capable of communicating on the second working frequency. The presence of material with conductive properties under the tag, should be understood to change the operating conditions of the first RFC device such that it can communicate with the second RFC device.

The first RFC device being unshielded should be interpreted as it having no shielding layer, such as a ferrite layer, with the purpose of protecting from electromagnetic interference of nearby conductive materials or in any other way shield the tag.

Today, the manufacturing of packaging materials is performed with high precision, in order to assure quality in production. Also, the contents of the product are very precise. This has the positive effect of making it possible to determine the conductive properties to a high accuracy, which may be advantageous when choosing the working frequency of the RFC device.

Another advantage of using the disclosed method is that the cost may be reduced by not having to have a shielding layer in the first RFC device. This may be important when producing high quantities. Furthermore the thickness of the first RFC device may be reduced by having it unshielded, which may be an advantage since it has a reduced impact on the size and structure of the food package.

Furthermore, the reduced thickness that the proposed RFC device provides has an advantage of making it possible to incorporate the NFC device within the packaging material, such as under an outer plastic layer.

The communication range of the user device may be 20 millimeters.

The packaging material may comprise a paperboard layer having a thickness of less than 1 millimeter.

The packaging material may further comprise an Aluminum layer having a thickness of 2-20 micrometers.

The packaging material may further comprise at least one plastic layer.

An attachment layer may be provided between the packaging material and the first RFC device having a thickness of 0.05 - 0.3 millimeters. An advantage of this layer may be improved reading performance.

The second working frequency may be 10 - 15 MHz, or more preferably 13.56 MHz, which is the standardized frequency for Near Field Communication (NFC) devices.

The first working frequency may be 6 - 12 MHz.

The user device may be a mobile phone.

The second RFC device may be a NFC enabled device, i.e. compatible with the NFC standards.

The information exchange request may be a request to read data from the first RFC device or a request to write data on the first RFC device.

An advantage with this is that the information stored on the food package may be updated during the life-time of the food package. As an example, information may be updated during the different stages of the production line, or it may be updated by the consumer when the food package is bought, opened, emptied or recycled.

According to a second aspect it is provided a piece of packaging material enabled for wireless information exchange, said piece may comprise a packaging material, and a first Radio Frequency Communication (RFC) device, wherein the first RFC device is unshielded and wherein the first RFC device in combination with the conductive properties of the packaging material and/or the product held in the food package are configured such that an incoming signal on a second frequency is transformed to the first working frequency, and an outgoing signal on said first working frequency from the RFC device is transformed to the second frequency.

The packaging material may comprise a paperboard layer having a thickness of less than 1 millimeter.

The packaging material may further comprise an Aluminum layer having a thickness of 2-20 micrometers.

The packaging material may further comprise at least one plastic layer.

An attachment layer may be provided between the packaging material and the first RFC device having a thickness of 0.05 - 0.3 millimeters.

The piece of packaging material may be provided on a roll of packaging material with a plurality of pieces arranged consecutively.

The same advantages as described above with respect to the first aspect also applies to this second aspect.

According to a third aspect, it is provided a method for producing a piece of packaging material according to the second aspect, the method may comprise producing a packaging material, and providing a first RFC device to the packaging material such that the piece of packaging material is formed.

Still other objectives, features, aspects and advantages of the invention will appear from the following detailed description as well as from the drawings. The same features and advantages described with respect to one aspect are applicable to the other aspects unless explicitly stated otherwise.

### Brief Description of the Drawings

Embodiments of the invention will now be described, by way of example, with reference to the accompanying schematic drawings, in which
Fig. 1 illustrates the interaction between a user device and a food package provided with a RFC device.
Fig. 2a illustrates in perspective view a piece of packaging material enabled for wireless information exchange.
Fig. 2b illustrates in cross-sectional view the piece of packaging material enabled for wireless information exchange.
Fig. 3a shows a roll of packaging material.
Fig. 3b shows the roll of packaging material from above, illustrating how a plurality of pieces of packaging material is arranged consecutively.
Fig. 4 is a flowchart illustrating the steps of a method for wireless information exchange between a user device and a food package.
Fig. 5 is a flowchart illustrating the steps of a method for producing a piece of packaging material enabled for wireless information exchange.

### Detailed description

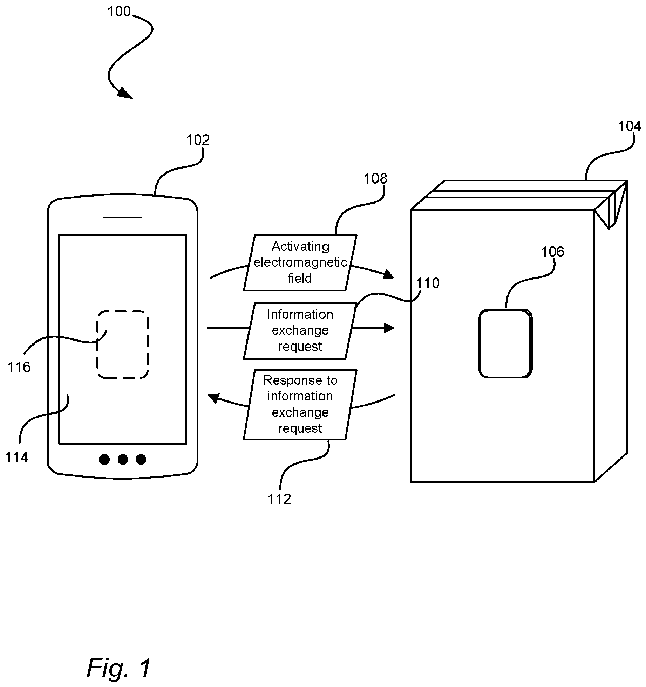

Fig. 1 illustrates by way of example how wireless information exchange 100 between a user device 102 and a food package 104 holding liquid food can be performed. As used herein, "liquid food" refers to any food product that is non-solid, semi-liquid or pourable at room temperature, including beverages, such as fruit juices, wines, beers, sodas, as well as dairy products, sauces, oils, creams, custards, soups, etc, and also solid food products in a liquid, such as beans, fruits, tomatoes, stews, etc.

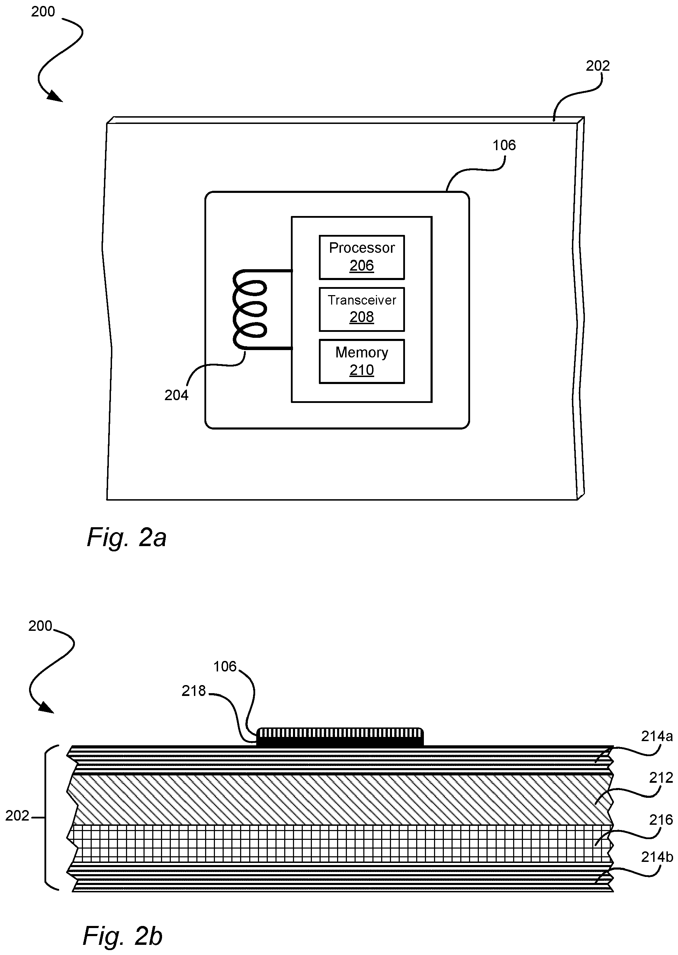

The food package 104 can be made of a packaging material 202 with one or more layers, further illustrated in Fig. 2b. It can comprise a first Radio Frequency Communication (RFC) device 106, provided on the outside of the food package 104 as illustrated in Fig. 1 or embedded between any two layers of the packaging material 202. Even though illustrated on the front of the food package 104, the first RFC device 106 can be placed on any side of the food package 104. The first RFC device 106 can be a passive device, i.e. having no internal power supply. Furthermore, the first RFC device 106 can be unshielded, meaning it lacks any protecting layers, such as a layer of metallic or any other suitable material with the purpose of shielding against electromagnetic interference that can be caused by for instance nearby conductive materials.

The user device 102 can have a user interface 114, herein a screen provided on the front of the user device 102, and a second RFC device 116, herein provided within the user device 102. The second RFC device 116 can be a Near Field Communication (NFC) enabled device, i.e. compatible with NFC standards. As illustrated in Fig. 1 the user device 102 can be a mobile device such as a smart phone, or a tablet or any other electronic device fit for the purpose.

The first RFC device 106 can be activated by an electromagnetic field 108 generated by the user device 102. The electromagnetic field can power the first RFC device 106. When the first RFC device 106 is active the second RFC device 116 can send an information exchange request 110 to which the first RFC device 106 can send a response 112. The information exchange request 110 can be a request to read data from the first RFC device 106, or it can be a request to write data to the first RFC device 106. The information exchange request 110 can also be instructions to the user device 102 that triggers a predefined action on the user device 102, such as connect to a web site or launch an app.

Fig. 2a and 2b illustrates, by way of example, a piece of packaging material 200 enabled for wireless information exchange. The piece of packaging material 200 can comprise a packaging material 202, and a RFC device 106.

The RFC device 106 can comprise a processor 206 for controlling the device, a transceiver 208 for transmitting and receiving information, a memory 210 to store information and a coil 204 for creating an induced current generated by a nearby electromagnetic field. The information stored on the memory 210 can be product information relevant to either the producer or the consumer, such as origin, place and date of manufacturing, expiration date, contents and additives of the product, package history and/or a unique identifier.

The stored information can be divided such that the consumer only can access consumer relevant information and the producer only can access producer relevant information. This can be achieved by having different levels of authorizations or, even though not illustrated in in Fig. 2a or 2b, by having a second memory in the RFC device 106 so that consumer relevant information can be stored and accessed on the first memory, and producer relevant information can be stored and accessed on the second memory.

An attachment layer 218 can be provided between the RFC device 106 and the packaging material 202.

The packaging material 202 can comprise one or more layers of material. As an example, one way to produce the packaging material 202 can be to have a protective outer plastic layer 214a and an protective inner plastic layer 214b, a paperboard layer 212 that can provide strength and a printable surface between the outer plastic layer 214a and the inner plastic layer 214b, and an Aluminum layer 216, that can protect the product from light and/or oxygen, between the paperboard layer 212 and the inner plastic layer 214b, as illustrated in Fig. 2b. Even though described and illustrated in this order the layers can be placed in any order, and also additional layers may be present as well.

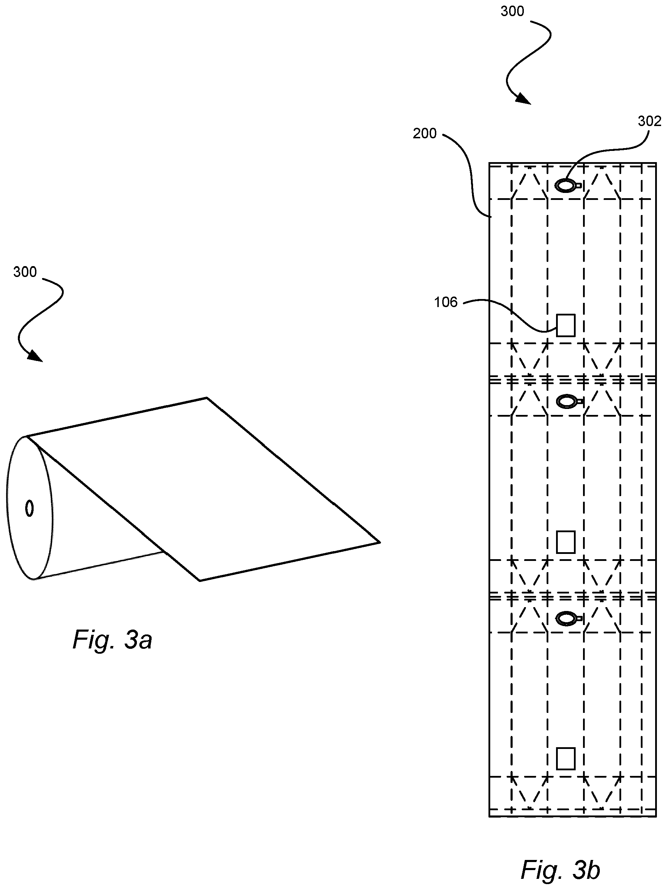

Fig. 3a and 3b illustrates how the piece of packaging material 200 can be provided on a roll 300 of packaging material 202. A plurality of pieces of packaging material 200 can be arranged consecutively, as seen in the top view of the roll in Fig. 3b. Each piece of packaging material can have an opening device 302 and a RFC device 106.

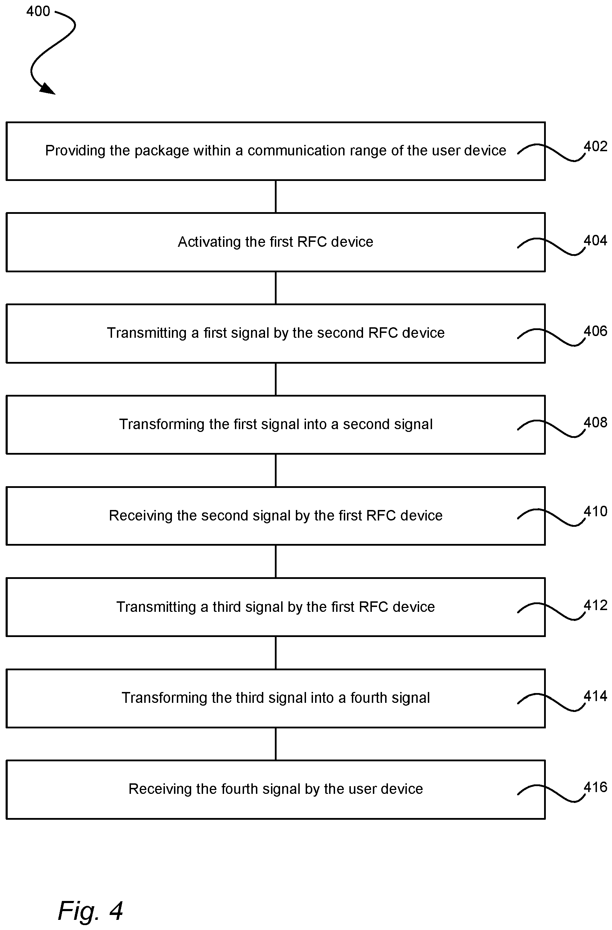

Fig. 4 is a flow chart illustrating the steps of a method 400 for wireless information exchange between a user device 102 and a food package 104.

In a first step 402, the food package 104 can be provided within a communication range of the user device 102.

In a second step 404, the first RFC device 106 can be activated by an electromagnetic field generated by the user device 102.

In a third step 406, a first signal can be transmitted by the second RFC device 116. The first signal can correspond to an information exchange request 110 on a second working frequency.

In a fourth step 408, the first signal can be transformed into a second signal. The second signal can correspond to the information exchange request 110 on a first working frequency.

In a fifth step 410, the second signal can be received by the first RFC device 106.

In a sixth step 412, a third signal can be transmitted by the first RFC device 106. The third signal can correspond to a response 112 to the information exchange request on a first working frequency.

In a seventh step 414, the third signal can be transformed into a fourth signal. The fourth signal can correspond to the response 112 to the information exchange request on the second working frequency.

In an eighth step 416, the fourth signal can be received by the user device 102.

Even though described in a certain order, the different steps may also be performed in other orders, as well as multiple times such as transmitting multiple information exchange requests while the food package 104 is within communication range of the user device 102.

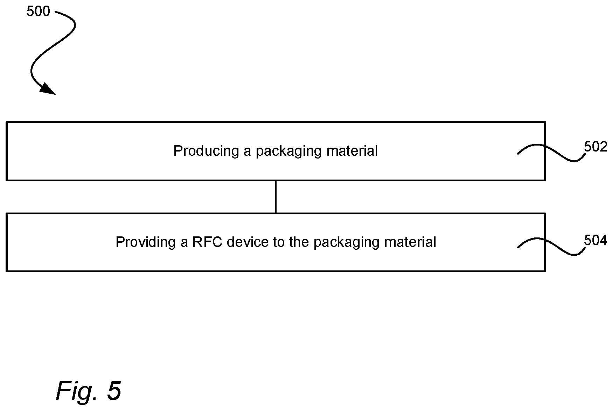

Fig. 5 is a flow chart illustrating the steps of a method 500 for producing a piece of packaging material 200, enabled for wireless information exchange.

In a first step 502, a packaging material 202 can be produced.

In a second step 504, a RFC device 106 can be provided on the packaging material 202, such that the piece of packaging material 200 is formed. The RFC device 106 can be preprogrammed with information, before it is attached to the food package 104. This can be an advantage in that no extra time for writing information to the RFC device 106 is added to the production line.

In order to provide increased ease of use, the food package 104 can have printed reference marks showing the user where to place the user device 102 in relation to the package 104 to get the adequate reading and/or writing performances, that is, placing the user device 102 within the communication range. The printed reference marks can especially be useful in the case of an embedded RFC tag 106, not visible to the user.

The method for wireless information exchange between the food package and the user device can enable more interactions both between the producer and the food package, and between a user and the food package. For instance, registering a food package as recycled at a recycling station. This can allow for tracing when and where a food package is recycled, or be a way of implementing a remuneration program. Another example can be registering a food package as empty when the product has been consumed, and thereby automatically adding it to a shopping list on the user device.

From the description above follows that, although various embodiments of the invention have been described and shown, the invention is not restricted thereto, but may also be embodied in other ways within the scope of the subject-matter defined in the following claims.

## Claims

1. A method (400) for wireless information exchange between a user device (102) and a food package (104) holding a liquid food product, wherein the food package (104) is made of a packaging material (202) and comprises a first Radio Frequency Communication (RFC) device (106) having a first working frequency,
wherein the first RFC device (106) is unshielded,
wherein the user device (102) comprises a user interface (114) and a second RFC device (116) having a second working frequency, and
wherein the second working frequency is greater than the first working frequency,
said method comprises
providing (402) the food package (104) within a communication range of the user device (102),
activating (404) the first RFC device (106) by an electromagnetic field (108) generated by the user device (102),
transmitting (406) a first signal by the second RFC device (116), wherein the first signal corresponds to an information exchange request (110) on the second working frequency,
transforming (408) the first signal into a second signal using the conductive properties of the packaging material and/or the product held in the food package, wherein the second signal corresponds to the information exchange request (110) on the first working frequency,
receiving (410) the second signal by the first RFC device (106),
transmitting (412) a third signal by the first RFC device (106), wherein the third signal is a response (112) corresponding to the information exchange request on the first working frequency,
transforming (414) the third signal into a fourth signal using the conductive properties of the packaging material and/or the product held in the food package, wherein the fourth signal corresponds to the response (112) to the information exchange request on the second working frequency, and
receiving (416) the fourth signal by the user device (102).

2. The method according to claim 1, wherein the communication range is 20 millimeters.

3. The method according to any one of the preceding claims, wherein the packaging material (202)
comprises a paperboard layer (212) having a thickness of less than 1 millimeters.

4. The method according to any one of the preceding claims, wherein the packaging material (202)
comprises an Aluminum layer (216) having a thickness of 2 - 20 micrometers.

5. The method according to any one of the preceding claims, wherein the packaging material (202)
comprises at least one plastic layer (214a, 214b).

6. The method according to any one of the preceding claims, wherein an attachment layer (218) is provided between the packaging material (202) and the first RFC device (106), having a thickness of 0.05 - 0.3 millimeters.

7. The method according to any one of the preceding claims, wherein the second working frequency is 10 - 15 MHz, such as 13.56 MHz.

8. The method according to any one of the preceding claims, wherein the first working frequency is 6 - 12 MHz.

9. The method according to any one of the preceding claims, wherein the second RFC device (116) is a Near Field Communication (NFC) enabled device.

10. The method according to any one of the preceding claims, wherein the information exchange request (110) is a request to read data from the first RFC device (106) or a request to write data on the first RFC device (106).

11. A piece of packaging material (200) for producing a food package (104) holding
a liquid food product, enabled for wireless information exchange, said piece (200) comprising
a packaging material (202), and
a first Radio Frequency Communication (RFC) device (106) with a first working frequency,
wherein the first RFC device (106) is unshielded,
wherein the first RFC device (106) in combination with the conductive properties of the packaging material (202) and/or the product held in the food package (104) are configured such that an incoming signal on a second frequency is transformed to the first working frequency, and an outgoing signal on said first working frequency from the RFC device (106) is transformed to the second frequency.

12. The piece of packaging material (200) according to claim 11, wherein the packaging material (202) comprises a paperboard layer (212) having a thickness of less than 1 millimeter.

13. The piece of packaging material (200) according to claim 11 or 12, wherein the packaging material (202) comprises an Aluminum layer (216) having a thickness of 2 - 20 micrometers.

14. The piece of packaging material (200) according to any one of claims 11 to 13, wherein an
attachment layer (218) is provided between the packaging material and the RFC device, having a thickness of 0.05 - 0.3 millimeters.

15. A method (500) for producing a piece of packaging material (200) according to any one of claims 11 to 14, enabled for wireless information exchange, wherein the method (500) comprises,
producing (502) a packaging material (202), and
providing (504) a first RFC device (106) to the packaging material (202) such that the piece of packaging material (200) is formed.
